# EUROPEAN PATENT APPLICATION

(11) **EP 4 261 109 A1**
(43) Date of publication of application: **18.10.2023**
(21) Application number: 22168343.6
(22) Date of filing: 14.04.2022
(51) Int. Cl.: B62D 33/04, B60P 1/28

(54) **FLOORING ELEMENT, TIPPER BODY UTILIZING SAID FLOORING ELEMENT AND METHOD FOR CONSTRUCTING A TIPPER**

(71) Applicant: "WIELTON" Spolka Akcyjna, 98-300 Wielun (PL)
(72) Inventor: GRESSIER, Christophe, 59251 Allennes les marais (FR)
(74) Representative: AOMB Polska Sp. z.o.o.

(57) **Abstract**

The present invention relates to tipper bodies used in transportation and construction industry. In particular, the present invention relates to flooring elements that are used for constructing the floor/base of the tipper body. Furthermore, the present invention relates to methods of constructing tipper bodies using the disclosed flooring elements.

## Description

### TECHNICAL FIELD

The present invention relates to tipper bodies used in transportation and construction industry. In particular, the present invention relates to flooring elements that are used for constructing the floor/base of the tipper body. Furthermore, the present invention relates to methods of constructing tipper bodies using the disclosed flooring elements.

### BACKGROUND OF THE DISCLOSURE

In the state of art, there are many different types of tippers and elements used for constructing their floor known.

From document JP1999115822A there is known a tipper body which has a floor made of aluminum plates, that differ in thickness - the plates that are located near the back (near the door of the tipper) are of a higher thickness. Also, this document teaches of using friction stir welding to join the adjacent plates. However, simple plates are not the best suited shape for creating tipper floor, since they must have another supporting part below them, which complicates the structure in case of using plates of varying thickness. Furthermore, joining the plates using friction stir welding as is presented on Fig. 1 of this document - would result in a seam visible from the inside of the tipper, which is not desired.

From document EP0901939B1 presents an extruded element for use in creating tipper floor, that has a double-T cross-section, and is made of aluminum. Furthermore, the extruded element can be further reinforced using ceramic particles, especially for the elements in the back of the tipper, that are more likely to get damaged. However, such a construction of the extruded element still uses a plenty of material along the tipper body and also complicates the preparation of such additives.

Conventional construction of floors of tipper are made from one aluminum sheet and welded crossmembers. During unloading tipper, products flow from the front to the rear part of the tipper and a maximum wear is on the rear area of the floor. In some conventional constructions, the panels have the same thickness along on the full length of the tipper body.

### SUMMARY OF THE DISCLOSURE

Accordingly, it is a goal of the present disclosure to provide a new element to create floors in tipper bodies, which has a high mechanical strength and wear resistance, that is highly convenient to bong with adjacent elements. Reducing weight of the floor to the essential minimum causes weight and costs reduction of tippers constructed with such elements.

Furthermore, another aim of the present invention is to provide tippers made with the floor having the disclosed elements provide a vehicle with optimized weight and strength parameters, what results in cost reduction in production and later - in use (smaller weight decreases the fuel consumption). Tipper using the disclosed flooring elements also provide joints and welds on the underside of the floor, which reduces visibility of joints together with providing better strength parameters.

Finally, yet another aim of the present invention is to provide a method for constructing tippers using the disclosed flooring elements.

The object of the present invention is a flooring element, for use in tipper bodies, which is in a form of an extruded piece made of metal, **characterized in that** the flooring element
- has a hollow cylindrical shape with a top surface and a bottom surface,
- wherein the top surface forms a planar surface that extends beyond a contour of the hollow cylindrical shape of the flooring element on both sides of said contour,
- wherein said planar surface, when viewed in the cross section, has regions at its ends, that are either equally thick or thicker than the rest of said planar surface, wherein the thickness of said regions is at least 8mm, and preferably is equal to 9mm, 10mm, 11mm, 12mm, 13mm or 14 mm, most preferably is equal to 10mm,
- wherein said regions extend from the ends of said planar surface for the length of up to 20mm, preferably up to 15mm, more preferably 8mm, 9mm, 10mm, 11mm or 12mm, most preferably is equal to 10mm.

Preferably, the hollow cylindrical shape has a contour having rectangular, square or trapezoidal shape.

Preferably, the flooring element further has at least one reinforcement located between the ends of the planar surface and the hollow cylindrical shape on the underside of the planar surface, preferably the reinforcement having a T-shaped cross section.

Preferably, the flooring element is made of aluminum, aluminum alloy or steel.

Preferably, one of the thickened regions of the flooring element has a lip extending below and further outwardly from said thickened region.

Furthermore, another object of the present invention is a tipper body with floor constructed of the flooring elements according to the invention.

Preferably, the thickness of the planar surface of the flooring elements is chosen in such a way that the flooring elements located near a front, i.e. nearest the closed side of the tipper, have a first thickness of the planar surface,
and each consecutive flooring element towards the back of the tipper body, i.e. towards the side of the tipper that is openable, has thickness of the planar surface chosen to be equal to or larger than that of the previous flooring element.

Preferably, the floor of the tipper is constructed using flooring elements made of varying materials, in particular using flooring elements made of varying aluminum alloys.

Preferably, the floor of the tipper is further provided with a steel liner,
wherein the floor is constructed of two groups of flooring elements:
first group having a first total height of the flooring element, and wherein the flooring elements from this group are not covered with the liner,
second group having a second total height which is smaller than the first total height by the thickness of the used liner in the tipper body, and wherein the liner is positioned above the flooring elements from this second group,
wherein the flooring element that is the first one from the second group and is adjacent to flooring elements from the first group, is of the type having an additional lip.

Preferably, said liner extends substantially across the entire length of the floor of the tipper.

Preferably, a liner extends from the middle of the length to the back side of the tipper.

Moreover, another object of the present invention is a method for constructing a tipper, having a tipper body according to the present invention, wherein a friction stir welding technic is used to join adjacent flooring elements.

Preferably, the tipper body is provided with a liner, wherein said liner is connected to the floor elements by bolting or friction stir welding.

Preferably, a weld between the adjacent flooring elements is created at the underside of said flooring elements.

Introducing a tipper body in which the thickness of the floor changes progressively from front part to rear part and where floor elements are extruded aluminum panels allows for weight saving, since configuration of floor panels/elements can be precisely controlled and the weight distribution (having in mind also the strength) across the length - optimized. The thickness of the floor increases for better abrasion resistance towards the rear of the tipper body. Because of this type of the construction, there is also needed two times less welds when compared with traditional tipper floors.

### BRIEF DESCRIPTION OF THE DRAWINGS

The disclosure will now be discussed with reference to the attached drawings, in which:
Figure 1 depicts a construction of a flooring element in a front view together with reinforcements and thickened regions,
Figure 2 depicts a few flooring elements with increasing thickness of top surface in a front view,
Figure 3 depicts a flooring element made of steel with a lip protruding from a thickened region in a front view,
Figure 4 depicts a combination of a smaller flooring element with a lip and a placed liner on it and the higher flooring element without a lip in a front view,
Figure 5 depicts a typical structure of a tipper in an isometric view,
Figure 6 depicts two flooring elements connected by method of welding in a front view,
Figure 7 depicts a cross section of a tipper,
Figure 8 depicts an assembled floor utilizing flooring elements, in an isometric view.

### LIST OF REFERENCE NUMERALS USED

1 flooring element
2 hollow cylindrical shape
3 top surface
4 bottom surface
5 contour
6 region
7 reinforcement
8 lip
9 liner
10 front of tipper
11 sidewalls
12 floor
13 back of tipper
14 weld

For a proper understanding of the disclosure, in the detailed description below corresponding elements or parts of the disclosure will be denoted with identical reference numerals in the drawings.

### DETAILED DESCRIPTION OF THE DISCLOSURE

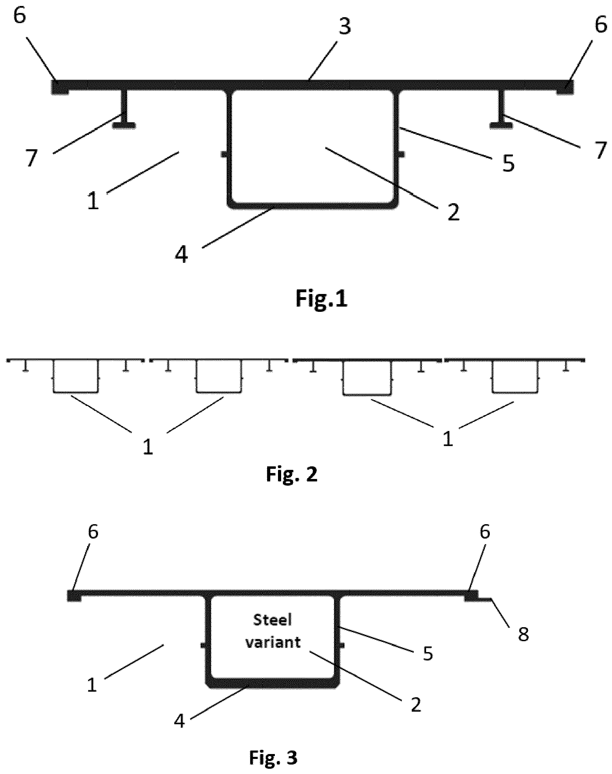

Fig. 1 shows an embodiment of the invention, in form of a flooring element 1 that is suitable for use while constructing tippers, which is in the form of an extruded panel made of metal. The flooring element 1 comprises a hollow cylindrical shape 2 that has a top surface 3 and a bottom surface 4, wherein the top surface 3 extends beyond said hollow cylindrical shape 2 (on both sides of the contour of said hollow cylindrical shape) to form a planar surface. A contour 5 of the hollow cylindrical shape 2 in this presented embodiment is rectangular. In other embodiments, the contour 5 of the hollow cylindrical shape 2 is square, trapezoid or etc.

On the presented hollow cylindrical shape 2 there is the planar surface which extends equally on both sites of the contour 5 of the hollow cylindrical shape 2. In other embodiments the planar surface does not symmetrically extend - part of the planar surface on one side of the contour 5 may be shorter or longer than part on the other side. The thickness of the planar surface can be between 4mm and 12mm, preferably it is 4, 5, 6, 7, 8, 9, 10, 11 or 12 mm. In preferred embodiments, the flooring element 1 has a total length between 2m and 3m, preferably in the range between 2.3m and 2.6m, for example e.g. length such that the flooring element spans across the entire width of the tipper. In some preferred embodiments, the length of the flooring elements 1 is such that it allows for producing tippers with the width 2420mm or 2550mm. On the other hand, the width of the flooring element 1 (measured as the length of the top surface 3 in the cross-section) preferably is between 200mm and 500mm, more preferably 365mm - since such a dimension is a good compromise of the desired size of the flooring element 1 and the cost related with producing it (bigger elements needing bigger extruding presses, thus generating higher production costs).

The planar surface has on both its ends thick regions 6, suitable for welding. Preferably, the thickness of said regions 6 is at least 8mm and more preferably is equal to 9mm, 10mm, 11mm, 12mm, 13mm or 14 mm. The thickness of said regions 6 is most preferably 10 mm.

When all the thickened regions 6 in the constructed tipper have the same thickness - they can be welded using one single tool (using FSW method), and in case the thickness of the planar surface is less than that of the regions 6 - the resistance/strength of the connections is higher (or equal) than that of the planar surface.

Those dimensions allow for joining adjacent elements 1 with strong joints and even surface without bulges or any defects. In one of the embodiments shown on Fig. 1, 3 or 4, the thick region 6 is 10mm thick. If the planar surface would be thicker, then it is possible to have even thicker region 6. In other cases, when having relatively thick planar surface - it is also preferable to keep thickness of the region 6 equal to the thickness of planar surface. If the designed mechanical stress of the tipper body is higher, then the thickness of the planar surface is chosen to be thicker. In the other embodiments, which are not destined to be welded by FSW but by other welding technics - the regions 6 can have chamfering to ease the process of connecting.

Reinforcements 7 are used in many embodiments of the invention on the bottom surface 4 of the planar surface to provide efficient rigidity, mechanical strength, wear resistant and dent resistance. Preferably, there is at least one reinforcement 7 in the form of a reinforcing rib and with a preferable shape being a T-bar, how it is shown on Fig. 1. The Fig.1 shows reinforcements 7 on both sides of the hollow cylindrical shape 2, having a T-bar cross section.

In case of the longer planar surface or special need to reinforce it additionally, two, three or more T-bars are used. Use of such reinforcements 7 is advantageous because it provides reinforcement to the flooring element 1 without the need of using more of the material to create sufficiently strong planar surface.

The contour 5 of the hollow cylindrical shape 2 also can be provided with the additional reinforcements in the form of ribs on lateral surface of said contour 5, between the top 3 and bottom 4 surfaces. Figs. 1, 2 and 3 show the flooring elements 1 with the contours 5 which have a single reinforcement in the form of rib on each lateral surface. There are possible other variants of reinforcements configurations in the form of ribs, for example without any ribs or with a larger number of ribs.

The flooring elements 1 are made of aluminum, aluminum alloys or steel. The use of aluminum or its alloys has a positive effect on the weight of the entire tipper, which will use these new flooring elements 1 in its construction. Steel is less resistant to corrosion and choosing types of steel that is resistant to corrosion increases its price, therefore the use of aluminum or its alloys is advantageous for this invention.

Panels made of aluminum alloys can have small dimensions and mass while maintaining the required strength, without the need to increase robustness through increasing the overall thickness of the flooring element 1. The use of steel can be advantageous when the flooring elements 1 would be used to create tippers with the need of extremely high strength and where the potentially increased mass does not discourage the manufacturer/user.

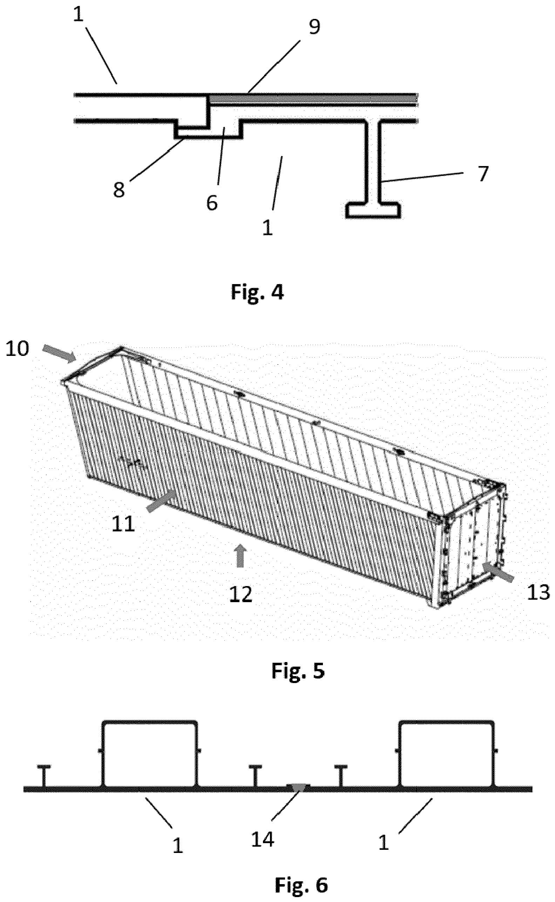

Fig. 3 shows an embodiment of the flooring element 1 with at least one thickened region having an additional lip 8, where the lip 8 protrudes below and further outwards. This lip 8 is structured in such a way to provide a greater amount of material forming the connection between the flooring element 1 with slightly higher dimensions (height) that is not covered from the top with a liner 9 and another adjacent flooring element 1 with slightly smaller dimensions (height) which is intended to be covered by the liner 9. Fig. 4 shows the combination of the smaller flooring element 1 with the lip 8 and the higher flooring element 1 without the lip 8 and with the liner 9 placed on the smaller flooring element 1. Such combination forms a flat surface, without protrusions.

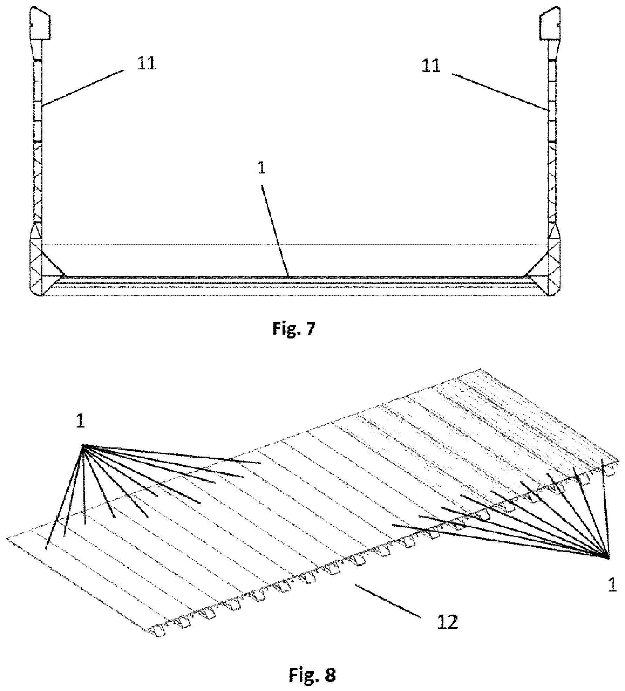

The flooring elements 1 described in the examples above are used for constructing tippers. The flooring elements 1 are preferably placed across the length of the tipper how it is presented in Fig. 8. Preferably, the flooring elements 1 have such length so that a single flooring element 1 extends substantially across the width of the tipper between its sides, what eliminates the need for extra joints. The cross section of the tipper is showed in Fig. 7.

In the simple embodiments, it is possible to create tippers using the same flooring elements 1 on the entire tipper floor.

A particularly advantageous configuration is the most economical when the flooring elements 1 are arranged with an increasing thickness of the planar surface from front of the tipper 10 towards the back of the tipper 13 (which is adapted to open during operation and unload the material carried by the tipper). Preferably, each subsequent flooring element 1 has a thickness greater than or the same as the previous flooring element 1. An embodiment of the arrangement of the flooring elements 1 is shown in Fig. 2. Such an arrangement of the flooring elements 1 is recommended, because when unloading the load from the tipper, the greatest pressure is on the back of the tipper 13, so locating the flooring elements 1 with the greatest thickness in the back of the tipper 13 provides greater strength for the parts of the floor 12 on which the unloaded material slides down/tumbles. The back part of the floor 12 is the most exposed to dents and other surface damage.

The flooring elements 1 can be made of aluminum or its alloys, or each flooring element 1 can potentially be made of a different material, and the criteria for choosing the appropriate material is the combination of mass and strength for utility purposes and the compatibility of the flooring elements 1 so that they can be joined together in a way to not create bulges with faults in the places of connections of the adjacent flooring elements 1. Preferably, the flooring elements 1 are selected in a way that they can be joined with the use of FSW (Friction Stir Welding). Preferably, except using pure aluminum, also aluminum alloys are used, in particular: 6005A T6 alloy, 6082 T6 alloy, 6060 T6 alloy, 6005A T6 alloy, 6082 T6 alloy, and 6082 T6 HB100 (having Brinell Hardness measured as HB100) alloy. Preferably, the flooring elements are chosen to be made of alloys that show gradually increasing hardness from the front of the tipper 10 towards the back of the tipper 13. Exemplary arrangement of the flooring elements 1 could utilize from the front of the tipper 10 the following alloys: 6060 T6 -> 6005A T6 -> 6082 T6 -> 6082 T6 HB100.

The tipper body in another embodiment is provided with the liner 9, preferably made of steel and in the form of a single steel plate or in the form of a plate made up of several smaller plates which may be joined together or only attached to the flooring elements 1. When the liner 9 is used, a substantially flat surface is provided. Part of the flooring elements 1 that make up the floor of the tipper, a first group, has a given height, and the other part of the flooring elements 1, a second group, has a lower height (smaller by the thickness of the liner 9) than the elements of the first group. Such a configuration is shown in Fig. 3.

The liner 9 stretches to a length which is appropriate and intended for a given and dedicated application. In various embodiments, the liner 9 will only be located near the tipper door, or up to 1/3 of the tipper length, or 50% of the tipper length, or in some rare cases - the liner may be positioned over the entire length of the tipper. Preferably, the thickness of the liner 9 is 3mm.

Joining of the flooring elements 1 described above to form the floor 12 during a construction of the tipper is preferably accomplished by welding, more preferably by FSW. The joining process is carried out on the thickened regions 6 at the ends of the planar surface of the flooring elements 1. The joining is preferably carried out from the side normally located below the tipper body in order to provide a flat surface of the planar surface and to eliminate or reduce any defects such as unevenness that can arise during welding at the joints of the flooring elements 1. The flooring elements 1 are joined with the liner 9 preferably by means of an FSW or by bolts. Because of the shape of the flooring elements 1, when viewed from the bottom, there is provided a good access to join the adjacent flooring elements 1 by a welding head to create a weld 14.

## Claims

1. Flooring element (1), for use in tipper bodies, which is in a form of an extruded piece made of metal, **characterized in that** the flooring element (1)
- has a hollow cylindrical shape (2) with a top surface (3) and a bottom surface (4),
- wherein the top surface (3) forms a planar surface that extends beyond a contour (5) of the hollow cylindrical shape (2) of the flooring element (1) on both sides of said contour (5),
- wherein said planar surface, when viewed in the cross section, has regions (6) at its ends, that are either equally thick or thicker than the rest of said planar surface, wherein the thickness of said regions (6) is at least 8mm, and preferably is equal to 9mm, 10mm, 11mm, 12mm, 13mm or 14 mm, most preferably is equal to 10mm,
- wherein said regions (6) extend from the ends of said planar surface for the length of up to 20mm, preferably up to 15mm, more preferably 8mm, 9mm, 10mm, 11mm or 12mm, most preferably is equal to 10mm.

2. Flooring element (1) according to claim 1, wherein the hollow cylindrical shape (2) has a contour (5) having rectangular, square or trapezoidal shape.

3. Flooring element (1) according to claim 1 or 2, wherein it further has at least one reinforcement (7) located between the ends of the planar surface and the hollow cylindrical shape (2) on the underside of the planar surface, preferably the reinforcement (7) having a T-shaped cross section.

4. Flooring element (1) according to any of the previous claims from 1 to 3, wherein it is made of aluminum, aluminum alloy or steel.

5. Flooring element (1) according to any of the previous claims from 1 to 4, wherein one of the thickened regions (6) of the flooring element (1) has a lip (8) extending below and further outwardly from said thickened region (6).

6. Tipper body with floor constructed of the flooring elements (1) according to any of the previous claims from 1 to 5.

7. Tipper body according to claim 6, wherein the thickness of the planar surface of the flooring elements (1) is chosen in such a way that the flooring elements (1) located near a front, i.e. nearest the closed side of the tipper, have a first thickness of the planar surface,
and each consecutive flooring element (1) towards the back of the tipper body, i.e. towards the side of the tipper that is openable, has thickness of the planar surface chosen to be equal to or larger than that of the previous flooring element (1).

8. Tipper body according to claim 6 or 7, wherein the floor is constructed using flooring elements (1) made of varying materials, in particular using flooring elements (1) made of varying aluminum alloys.

9. Tipper body according to claim 6, 7 or 8, wherein the floor is further provided with a steel liner (9),
wherein the floor is constructed of two groups of flooring elements (1):
first group having a first total height of the flooring element (1), and wherein the flooring elements (1) from this group are not covered with the liner (9),
second group having a second total height which is smaller than the first total height by the thickness of the used liner (9) in the tipper body, and wherein the liner (9) is positioned above the flooring elements (1) from this second group,
wherein the flooring element (1) that is the first one from the second group and is adjacent to flooring elements from the first group, is of the type as defined in claim 5.

10. Tipper body according to any of the previous claims 6,7,8 or 9, wherein said liner (9) extends substantially across the entire length of the floor of the tipper.

11. Tipper body according to any of the previous claims 6, 7, 8, 9 or 10, wherein a liner (9) extends from the middle of the length to the back side of the tipper.

12. Method for constructing a tipper, having a tipper body as defined in any of the previous claims from 1 to 11, wherein a friction stir welding technic is used to join adjacent flooring elements (1).

13. Method for constructing a tipper according to claim 12, wherein the tipper body is provided with a liner (9), wherein said liner is connected to the floor elements (1) by bolting or friction stir welding.

14. Method for constructing a tipper according to claims 12 or 13, wherein a weld between the adjacent flooring elements (1) is created at the underside of said flooring elements (1).
